# EUROPEAN PATENT APPLICATION

(11) **EP 4 651 368 A1**
(43) Date of publication of application: **19.11.2025**
(21) Application number: 24805091.6
(22) Date of filing: 17.07.2024
(51) Int. Cl.: H02S 20/00, H02S 20/10, F24S 25/50

(54) **FLEXIBLE PHOTOVOLTAIC SUPPORT AND STEEL CABLE SUPPORT UNIT**

(30) Priority: 29.03.2024 CN 202420632001 U
(71) Applicant: Arctech Solar Holding Co., Ltd., Jiangsu 215331 (CN)
(72) Inventor: CAI, Hao, Suzhou, Jiangsu 215331 (CN); CHEN, Changhong, Suzhou, Jiangsu 215331 (CN); ZHANG, Peng, Suzhou, Jiangsu 215331 (CN); WU, Yan, Suzhou, Jiangsu 215331 (CN); WANG, Qilong, Suzhou, Jiangsu 215331 (CN); GAO, Zibin, Suzhou, Jiangsu 215331 (CN); WANG, Sheng, Suzhou, Jiangsu 215331 (CN)
(74) Representative: ABG Intellectual Property Law, S.L.
(86) International application number: PCT/CN2024/105913
(87) International publication number: WO 2025/200192

(57) **Abstract**

The disclosure provides a photovoltaic flexible bracket, and a cable support unit comprising a cable rod and a connecting seat. The cable rod comprises a circular tubular body for supporting adjacent steel cables, with a fixing member at each end, and an open groove on each fixing member. The connecting seat at least partially extends into the open groove and is fixed to the fixing member through a locking member, connecting the cable rod to the steel cable. During production, since the circular tubular body of the cable rod is not subject to human intervention and maintains its original shape, the structural durability and bending resistance of the cable rod are improved, and the performance is ensured. And the production complexity of the cable rod is effectively reduced, and its production yield is improved, enabling mass-productions, which effectively promotes energy conservation and cost reduction for enterprises.

## Description

### FIELD OF THE DISCLOSURE

The present disclosure relates to a technical field of photovoltaic flexible bracket, and particularly to a photovoltaic flexible bracket and a cable support unit.

### BACKGROUND

Photovoltaic brackets are an important part of photovoltaic power generation systems. To meet market demands, their structures are diverse. In recent years, photovoltaic flexible brackets have been widely used in industry and daily life due to their simple and light structure, low cost, easy preassembly, large span and flexible construction.

In the prior art, the commonly used photovoltaic flexible brackets are mostly three-cable flexible photovoltaic brackets, wherein the main body is composed of two load-bearing steel cables at the top, a stabilizing steel cable at the bottom, and a plurality of cable rods connected between the three steel cables, which are used to stably support the photovoltaic modules. At the present market, the cable rods in the three-cable flexible photovoltaic brackets are mostly manufactured by flattening two ends of round tubes. However, this manufacturing process has low cable rod yield rates and high production costs, and the process destroys the structural form of the round tube itself due to manual intervention, resulting in the cable rod having a low structural durability and poor performance, and there is room for improvement.

### SUMMARY OF THE INVENTION

The purpose of this disclosure is to provide a photovoltaic flexible bracket and a cable support unit to improve the structural durability of the cable rod and to ensure its performance. At the same time, it improves the production yield and reduces the production cost of the corresponding photovoltaic flexible bracket.

The technical solution provided by this disclosure are as follows.

In one aspect, a cable support unit for photovoltaic flexible brackets is provided, comprising a cable rod and a connecting seat; wherein
the cable rod comprises a circular tubular body for supporting adjacent steel cables; and
a fixing member is respectively provided at two ends of the circular tubular body, and an open groove is provided on each fixing member; and
the connecting seat at least partially extends into the open groove and is fixed to the fixing member through a locking member to connect the cable rod to the steel cable.

With a cable support unit for photovoltaic flexible brackets provided by the present disclosure, the main body of the cable rod is configured in a circular tubular shape, and fixing members with open grooves are respectively provided at both ends of the circular tubular shaped main body. In actual practices, after the connecting seat is provided on the corresponding steel cable, let the connecting seat at least partially extend into the open groove, and the fixing seat is connected to the corresponding end of the cable rod through the open groove, so that the cable rod can be installed onto the corresponding steel cable.

By adopting this configuration, on one hand, since the main body of the cable rod is not subject to human intervention, the structural durability of the cable rod is higher. Compared to angle steel or C-shaped steel, although the circular tubular main body has a similar cross-sectional area to these two, its section modulus is larger, its bending resistance is stronger, and its performance is better. At the same time, the overall structure of the cable rod is more aesthetic, the production is more efficient, and the production yield of the cable rod is higher, which effectively saves production cost of an enterprise.

In some embodiments, the fixing member comprises a first fixing plate, a bottom plate and a second fixing plate, wherein the first fixing plate and the second fixing plate are arranged in parallel and spaced apart, and the bottom plate is arranged between the first fixing plate and the second fixing plate, and two ends of the bottom plate are respectively fixed to the first fixing plate and the second fixing plate, and the first fixing plate, the bottom plate and the second fixing plate jointly enclose and form the open groove; and
the two ends of the circular tubular body are respectively connected to surfaces of corresponding bottom plates away from the corresponding first fixing plate and the corresponding second fixing plate in a thickness direction of the bottom plates; and
the first fixing plate and the second fixing plate are detachably connected to a corresponding connecting seat through the locking member, so that a corresponding end of the cable rod is fixed to a corresponding steel cable.

The cable support unit for photovoltaic flexible brackets provided by the present disclosure utilizes a first fixing plate, a bottom plate and a second fixing plate to enclose an open groove. In actual operation, after the connecting seats are installed at specified positions in a length direction of corresponding steel cables, a cable rod is placed between the two steel cables, and the open grooves of the two fixing members are respectively buckled onto the corresponding connecting seats on the two steel cables, and then the corresponding fixing members are fixed to the corresponding connecting seats with locking members, thereby achieving a support and connection of the corresponding cable rod between the two steel cables. Compared to the prior art that uses a process of flattening two ends of a round tube to form a cable rod, with a cable rod configured in a way according to this disclosure, two ends of the cable rod are sealed by the bottom plate of the fixing member, and only the outer wall of the main body needs anti-rust treatment during the production process. The anti-rust treatment is simple, easy, and highly efficient, which reduces the process cost. And, compared to the operation of connecting an L-shaped angle steel or a C-shaped steel to the connecting seat at one side, the fixing member is connected to the connecting seat through the first fixing plate and the second fixing plate. Due to different force distribution, eccentric forces are avoided, and the probability of generating a bending moment is effectively reduced, making the cable rod more durable and having better performance, effectively extending its service life, and improving the structural stability of the corresponding photovoltaic flexible bracket. In addition, the process of connecting the fixing member to the main body may deploy a variety of methods, with simple operation, and efficient manufacturing, which makes the cable rod have a higher yield rate, and helps to further reduce production costs of an enterprise.

In some embodiments, a reinforcement rib plate is provided between the first fixing plate and the second fixing plate.

With the cable support unit for photovoltaic flexible brackets provided by the present disclosure, a reinforcement rib plate is utilized to enhance the structural strength of the fixing member, reducing the probability of local buckling of the fixing member during usage, and helping further extend the service life of the cable rod, thereby improving its performance.

In some embodiments, the locking member comprises a locking bolt; and
a threaded end of the locking bolt vertically penetrates and is threadedly matched with the first fixing plate, the connecting seat and the second fixing plate in sequence; and
the first fixing plate, the bottom plate and the second fixing plate are integrally bent and formed.

A cable support unit for photovoltaic flexible brackets provided in the present disclosure utilizes a plate bending process to form a fixing member, which helps to improve the structural integrity and structural strength of the fixing member, thereby ensuring the performance of the corresponding cable rod.

At the same time, the fixing member and the connecting seat are connected by locking bolts to achieve a detachable connection between the fixing member and the connecting seat. The connecting structure is simple and easy to install. While improving the assembly efficiency and reducing assembly cost of the corresponding ends of the cable rods and the corresponding steel cables, it helps to improve the ease of usage of the cable support unit for photovoltaic flexible brackets.

In some embodiments, the connecting seat comprises a pressing block and a mounting pad; and
a first through groove is provided on one side of the pressing block in a thickness direction thereof, and the mounting pad is detachably connected to the side of the pressing block where the first through groove is provided; and
the fixing member is connected to an end of the pressing block away from the mounting pad.

A cable support unit for photovoltaic flexible brackets provided by the present disclosure utilizes a mounting pad and a first through groove provided on a pressing block to constitute a through hole for the steel cable to pass through, and the overall structure of the connecting seat is simple. During actual operations, the staff will embed the corresponding segment of the steel cable into the first through groove from the open end of the first through groove, and then fix the mounting pad onto the side of the pressing block where the first through groove is opened, so that the connecting seat can be detachably installed at the corresponding position in a length direction of the steel cable. The fixing method of the connecting seat and the steel cable is simple and easy, which effectively ensures the convenience of installing the connecting seat onto the steel cable, improves the assembly efficiency of the two parts, and thereby effectively improves the convenience of usage of the cable support unit for photovoltaic flexible brackets.

In some embodiments, the connecting seat further comprises an anti-slip strip, which is arranged in the first through groove, and a length direction of the anti-slip strip is parallel to a length direction of the first through groove; and
the anti-slip strip is provided with a second through groove, and an opening of the second through groove is opposite to an opening of the first through groove; and
two ends of the anti-slip strip in the length direction extend out of corresponding side walls of the pressing block, and the mounting pad is pressed onto a side of the anti-slip strip away from the second through groove.

In some embodiments, the anti-slip strip is an aluminum alloy strip, and the mounting pad is a steel plate.

A cable support unit for photovoltaic flexible brackets provided by the present disclosure has an anti-slip strip made of aluminum alloy provided between the mounting pad and the steel cable. Since aluminum alloys have a low hardness, when the mounting pad is pressed onto the side of the anti-slip strip away from the second through groove, the anti-slip strip will be subjected to a certain deformation and will fit with the surface of the steel cable, thereby effectively increasing the roughness of the surface of the anti-slip strip, and then increasing the friction between the strip and the surface of the steel cable. In this way, the occurrence of slippage along the length direction of the steel cable due to certain forces after the connecting seat is installed at the designated position on the steel cable can be effectively reduced, which helps to improve the connection stability between the corresponding cable support unit for photovoltaic flexible brackets and the steel cable. In other words, it helps to improve the stability of the overall structure of the corresponding photovoltaic flexible bracket.

In some embodiments, side walls of the pressing block corresponding to two ends of the first through groove in a width direction are provided with connecting lugs, and the connecting lugs are arranged parallel to the mounting pad and located at an end of the pressing block provided with the first through groove; and
two ends of the mounting pad in a length direction are provided with connecting structures, and the connecting structures are configured to detachably fix the mounting pad and the corresponding connecting lugs.

With the cable support unit for photovoltaic flexible brackets provided by the present disclosure, a mounting pad is provided on the pressing block, and a connecting structure is used to connect the corresponding connecting lugs and the two ends of the mounting pad in the length direction, so that the mounting pad can be detachably fixed onto the pressing block at the sides of the first through groove, which helps to improve the assembly convenience of the connecting seat, and thus effectively ensures the convenience of setting up the cable support unit for photovoltaic flexible brackets and the corresponding photovoltaic flexible bracket.

In another aspect, the present disclosure also provides a photovoltaic flexible bracket, comprising:
a steel cable support structure, wherein the steel cable support structure comprises a plurality of cable support units for photovoltaic flexible brackets as described in any one of the above embodiments, and
steel cables, wherein the steel cables comprise one or more load-bearing cables and a stabilizing cable disposed below the load-bearing cables; wherein
a plurality of cable rods of the steel cable support structure is fixed to the load-bearing cables or the stabilizing cable in pairs through the connecting seats, and the plurality of cable rods of the steel cable support structure are arranged in a same plane; and
multiple steel cable support structures are provided, and the multiple steel cable support structures are arranged at intervals along a length direction of the steel cables.

In some embodiments, a plurality of the photovoltaic flexible brackets is provided, and
adjacent photovoltaic flexible brackets are connected through a cable support unit for photovoltaic flexible brackets, wherein
one end of the cable rod of the cable support unit for photovoltaic flexible brackets is connected to a load-bearing cable of one photovoltaic flexible bracket through a corresponding fixing member, and one other end is connected to the stabilizing cable of an adjacent photovoltaic flexible bracket through a corresponding fixing member.

Compared to the prior art, the photovoltaic flexible bracket and the cable support unit provided in the present disclosure have at least one of the following beneficial effects:
1. In the present disclosure, the main body of the cable rod is configured to be in a shape of a circular tube, and two ends of the circular tubular body are respectively connected to fixing members formed by bending, and the cable rod and the connecting seat are connected with the help of the open groove of the fixing member, so as to achieve the installation of the cable rod between adjacent steel cables. On one hand, since the main body of the cable rod is not subject to human intervention and the fixing members are formed by bending a plate, the integrity is stronger, so that the structure of the cable rod has higher durability and better performance. At the same time, since the two ends of the circular tubular body of the cable rod are sealed by the fixing members, the production process of the cable rod does not need to carry out anti-rust treatment at the inside of the circular tubular body, thus the production process of the cable rod is simpler, and the production yield of the cable rod is higher. It is suitable for mass production, and the production cost of the enterprise is effectively reduced.
2. In the present disclosure, by opening a first through groove on the pressing block and providing a removable snap-fit mounting pad on the pressing block at the side of the first through groove, and at the same time providing an anti-slip strip in the first through groove, the connecting seat can be detachably and securely installed at a designated position on the steel cable. The installation structure of the connecting seat and the corresponding steel cable is simple, which helps to improve the convenience and stability of the cable support unit for photovoltaic flexible brackets when it is provided between two steel cables.
3. In the present disclosure, the anti-slip strip is an aluminum alloy strip. Since the aluminum alloy strip will be deformed to a certain extent when squeezed, its surface will fit with the surface of the steel cable and the mounting pad, effectively increasing the roughness of its own surfaces, and then increasing the friction between it and the surfaces of the steel cable and the mounting pad. The anti-slip effect is significant, effectively ensuring the stability of the cable support unit for photovoltaic flexible brackets provided on the corresponding photovoltaic flexible bracket.
4. In the present disclosure, the anti-slip strip can be placed between the pressing block and the mounting pad as a separate part. Of course, the anti-slip strip and the mounting pad can also be formed integrally, so that when the mounting pad is securely attached onto the corresponding side of the pressing block, the stability of the connecting seat installed on the steel cable can be improved, thereby effectively improving the assembly efficiency of the cable support unit for photovoltaic flexible brackets and the steel cables, and effectively improving the construction stability of the corresponding photovoltaic flexible bracket.

### BRIEF DESCRIPTION OF THE DRAWINGS

The preferred embodiments will be described below in a clear and understandable manner with reference to the accompanying drawings to further illustrate the above-mentioned characteristics, technical features, advantages and implementation methods of the present disclosure.
FIG. 1 is an axonometric schematic diagram mainly illustrating the overall structure of a photovoltaic flexible bracket in an embodiment of the present disclosure;
FIG. 2 is an enlarged view of part A in FIG. 1, which is mainly utilized to illustrate the state of a photovoltaic module when it is assembled on a photovoltaic flexible bracket;
FIG. 3 is an axonometric schematic diagram mainly illustrating the overall structure of a cable rod in an embodiment of the present disclosure;
FIG. 4 is an enlarged view of part B in FIG. 3, mainly utilized to illustrate the overall structure of a fixing member;
FIG. 5 is an axonometric schematic diagram mainly illustrating the location of a reinforcement rib plate in an embodiment of the present disclosure;
FIG. 6 is a partial enlarged view mainly illustrating an overall structure of a connecting seat in an embodiment of the present disclosure;
FIG. 7 is an exploded view of the overall structure of a connecting seat according to an embodiment of the present disclosure.

Description of reference numerals:
1. Cable rod; 11. Circular tubular body; 12. Fixing member; 121. First fixing plate; 122. Bottom plate; 123. Second fixing plate; 124. Open groove; 2. Connecting seat; 21. Pressing block; 211. Mounting hole; 212. First through groove; 213. Connecting lug; 22. Mounting pad; 3. Reinforcement rib plate; 4. Anti-slip strip; 41. Second through groove;
100. Steel cable; 200. Load-bearing cable; 300. Stabilizing cable; 400. Photovoltaic module.

### DESCRIPTION OF THE ILLUSTRATED EMBODIMENTS

In order to more clearly illustrate the embodiments of the present disclosure or the technical solutions in the prior art, specific embodiments of the present disclosure will be described below with reference to the accompanying drawings. Obviously, the drawings described below are only some embodiments of the present disclosure. For those ordinary skilled in this field, other drawings and other embodiments can be obtained based on these drawings without creative work.

To make the figures more concise, only parts that are related to the present disclosure are schematically shown in each figure, and they do not represent the actual structure of products. In addition, in order to simplify the drawings and facilitate understanding, in some figures, only one of the parts with the same structure or function is schematically drawn or marked. In this article, "one" not only means "only one", but also means "more than one".

As a commonly used type of photovoltaic bracket, the photovoltaic flexible bracket is commonly seen in the form of three-cable flexible photovoltaic brackets, wherein the main body is composed of two upper load-bearing cables as the upper chord beam, and a lower stabilizing cable as the lower chord beam, and a middle cable rod to constitute a triangular cable truss. The lower stabilizing cable utilizes the triangular cable truss in the middle to provide support for the two upper load-bearing cables, thereby controlling the deflection of the component cables and achieving stable support of the photovoltaic module on the load-bearing cables. At present, the three-cable flexible photovoltaic bracket in the prior art mostly adopts cable rods in a structural form of round tube rods with flattened ends.

However, when these cable rods are made by flattening the two ends of a round tube, on one hand, the process is difficult to control, and the cable rod yield is low, and the production cost of the enterprise is high; on the other hand, human intervention in this process destroys the structure of the round tube itself, resulting in poor structural strength and low durability of the produced cable rod, which affects the overall performance of the corresponding photovoltaic flexible bracket.

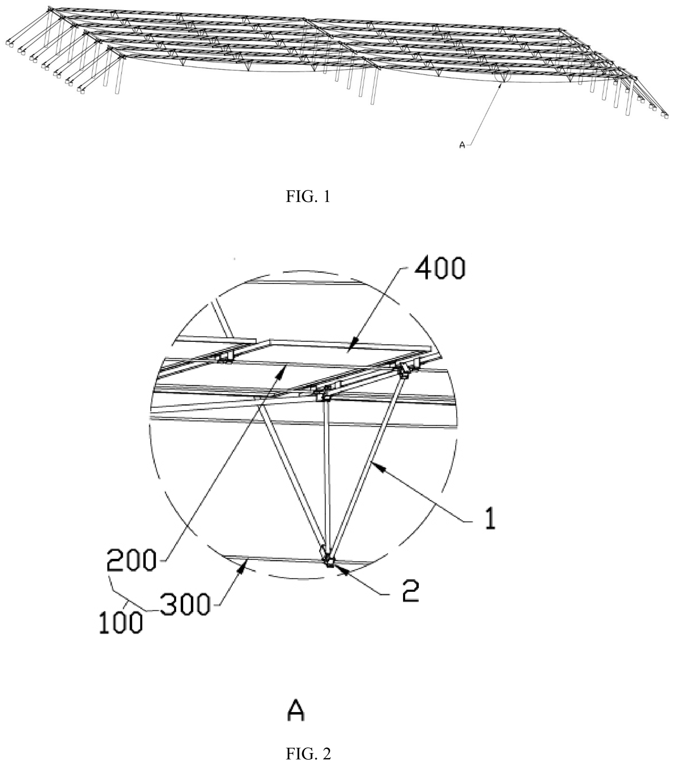

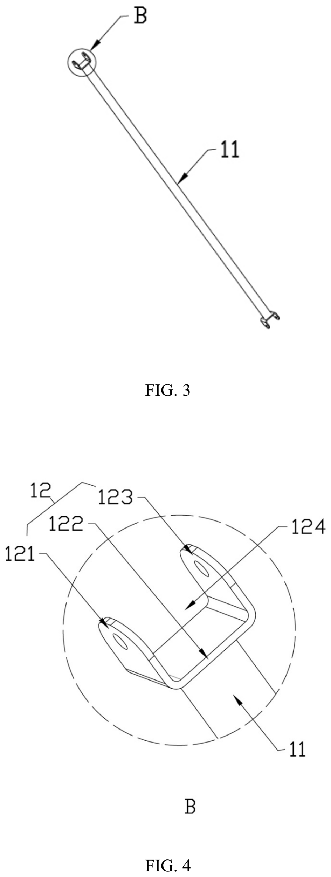

In one embodiment, referring to FIG. 1 to FIG. 7 of the accompanying drawings of the specification, a cable support unit for photovoltaic flexible brackets is disclosed, comprising a cable rod 1 and connecting seats 2; wherein, referring to FIG. 3 to FIG. 5, the cable rod 1 comprises a circular tubular body 11 and fixing members 12, and a fixing member 12 is provided at each end of the circular tubular body 11 in a length direction, and an open groove 124 is provided on each fixing member 12; and the connecting seats 2 are arranged on the steel cables 100, and at least part of the connecting seat 2 extends into the open groove 124, and is securely connected to the fixing member 12 through a locking member, thereby connecting the cable rod 1 to the corresponding steel cable. Preferably, the fixing member 12 is fixed to the circular tubular body 11 by welding. During the actual assembly, after the connecting seats 2 are arranged on corresponding steel cables 100, the fixing member 12 at a corresponding end of a corresponding cable rod 1 in a length direction is buckled onto a corresponding connecting seat 2, and the connecting seat 2 is kept at least partially inserted into the open groove, and then the fixing member 12 and the connecting seat 2 are securely connected by the locking member, so that the cable rod 1 can be installed onto the corresponding steel cable 100. In other embodiments, the fixing member 12 of the cable rod 1 can also be pre-fixed with the connecting seat 2 by the locking member, and then the connecting seat 2 and the steel cable 100 can be fixed on site of a project, which can greatly save labor cost and time cost of the project. Since the circular tubular body 11 is not subject to human intervention during the production process of the cable rod 1, the cable rod 1 has higher structural durability, stronger bending resistance, and better performance. At the same time, the overall structure of the cable rod 1 is more aesthetic, the production is more convenient, and the production yield of the cable rod 1 is higher, which effectively saves production cost of an enterprise. It is further elaborated below.

In one embodiment, based on the above embodiment, specifically with reference to FIG. 3 and FIG. 4, each fixing member 12 comprises a first fixing plate 121, a bottom plate 122 and a second fixing plate 123, wherein the first fixing plate 121 and the second fixing plate 123 are arranged in parallel and spaced apart, and the bottom plate 122 is arranged between the first fixing plate 121 and the second fixing plate 123, and is arranged perpendicular to the first fixing plate 121 and the second fixing plate 123. The two ends of the bottom plate 122 are respectively fixed to the first fixing plate 121 and the second fixing plate 123, so that the cross section of the fixing member 12 is U-shaped. In other words, the first fixing plate 121, the bottom plate 122 and the second fixing plate 123 jointly enclose and form the open groove 124. At the same time, the two ends of the circular tubular body 11 are respectively connected to corresponding fixing members 12, and are specifically located at middle positions of the corresponding bottom plates 122 away from the corresponding first fixing plates 121 and second fixing plates 123 in a thickness direction of the bottom plates 122. The connecting seats 2 are detachably fixed to corresponding positions on the steel cables 100 to install the corresponding cable rods 1, so as to fix the cable support unit to the steel cables 100. In actual operations, the first fixing plate 121 and the second fixing plate 123 of each fixing member 12 are detachably connected to the corresponding connecting seat 2 through one or more locking members, so that the corresponding ends of the cable rod 1 are securely connected between two corresponding steel cables 100.

During actual operations, the cable rod 1 can be pre-installed with two connecting seats 2, and the two fixing members 12 can be respectively snapped onto the corresponding connecting seats 2, and then the corresponding fixing members 12 can be securely connected to the corresponding connecting seats 2 with locking members, thereby realizing the pre-installation of the cable rod 1. At the site of the project, the connecting seats 2 can be directly installed at the relative positions of the steel cables 100 to complete the connection between the cable support unit and the steel cables 100, which can save installation time and reduce labor costs.

The fixing members 12 at both ends of the cable rod 1 are formed by sequentially bending the first fixing plate 121, the bottom plate 122 and the second fixing plate 123. Since the structure and manufacturing process of the fixing members 12 are relatively simple, the manufacturing cost is low, and it is suitable for mass production, and the scrap rate is low. In addition, the methods to connect the fixings 12 and the circular tubular body 11 are diverse, and the process is simple, which helps to save production cost of the enterprise. Moreover, compared to the prior art that uses a process of flattening two ends of a circular tube to form a cable rod 1, the cable rod 1 formed according to this disclosure has two ends sealed by the bottom plates 122 of the fixing members 12. The circular tubular body 11 of the cable rod 1 is preferably a hollow structure. During the production process, it is only necessary to perform anti-rust treatment on the outer wall of the circular tubular body 11, and there is no need to perform anti-rust treatment at the inner wall of the circular tubular body 11. The anti-rust process is simple, easy, and highly efficient, which reduces the process cost. At the same time, compared to an angle steel or a C-shaped steel, although the circular tubular body 11 has a cross-sectional area similar to the previous two, its cross-sectional modulus is larger and its bending resistance is stronger. And, compared to the operation of connecting an L-shaped angle steel or a C-shaped steel to the connecting seat 2 at one side, the U-shaped fixing member 12 is connected to the connecting seat 2 through the first fixing plate 121 and the second fixing plate 123. Because the distribution of forces are different from that of the L-shaped angle steel or the C-shaped steel, an eccentric force distribution is avoided, and the probability of generating a bending moment is effectively reduced, and the structural durability of the cable rod 1 is better, which effectively improves the structural stability of the corresponding photovoltaic flexible bracket.

Referring to FIG. 3 and FIG. 4, in this embodiment of the present disclosure, the fixing member 12 can be formed by bending a metal plate. In other words, the first fixing plate 121, the bottom plate 122 and the second fixing plate 123 are formed in one piece, which has a simple structure, is easy to process, and is conducive to reducing costs for enterprises; and it helps to improve the structural strength of the fixing member 12. Of course, the first fixing plate 121, the bottom plate 122 and the second fixing plate 123 can also be fixed by other methods such as clamping and welding, and the two ends of the circular tubular body 11 can also be fixed to the corresponding bottom plate 122 by welding, clamping, threaded connection, etc., which are not listed here one by one, and the forming method of the fixing member 12 and the connection method of the circular tubular body 11 and the fixing member 12 should not be regarded as a limitation on the protection scope of this disclosure. In the embodiment of the present disclosure, only the three plates are bent and formed, and the circular tubular body 11 is fixed to the corresponding position on the bottom plate 122 by welding as an example for explanation.

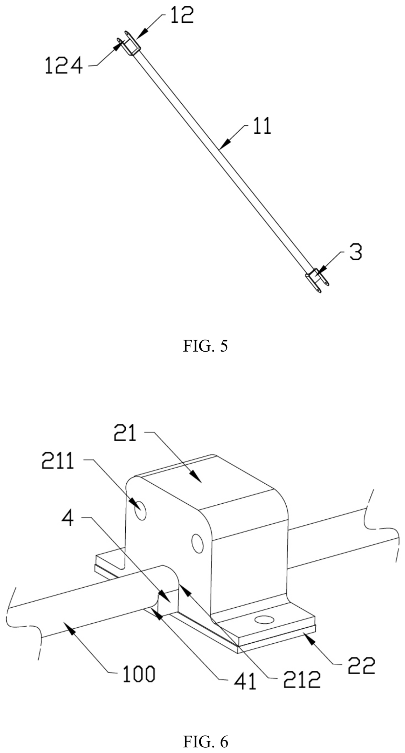

In order to further improve the structural strength of the fixing member 12 and reduce the probability of local buckling of the fixing member 12 during usage, in this embodiment of the present disclosure, referring to FIG. 5, a reinforcement rib plate 3 can be arranged between the first fixing plate 121 and the second fixing plate 123, and the reinforcement rib plate 3 is arranged to extend from a side of the bottom plate 122 in a direction away from the body 11 along the length direction of the circular tubular body 11 to adapt to more structural and dimensional requirements of fixing members 12 and improve the structural strength of the cable rod 1.

Referring to FIG. 2 to FIG. 6, in this embodiment of the present disclosure, the connecting seat 2 is generally in a block-shaped structure. During actual operations, the fixing member 12 is buckled onto the connecting seat 2, and the first fixing plate 121 and the second fixing plate 123 of the fixing member 12 are respectively located at two opposite sides of the connecting seat 2. In this embodiment of the present disclosure, the first fixing plate 121 and the second fixing plate 123 of the fixing member 12 are respectively located at both sides of the connecting seat 2 in a thickness direction, and the distance between the first fixing plate 121 and the second fixing plate 123 of each fixing member 12 is slightly larger than the thickness dimension of the connecting seat 2, so that the fixing member 12 matches with the connecting seat 2. Referring to FIG. 4, in case two cable rods 1 need to be installed at a same position of a connecting seat 2, i.e. two cable rods 1 need to be stacked, the distance between the first fixing plate 121 and the second fixing plate 123 of the fixing member 12 of the outer cable rod 1 should be slightly larger than the distance between the first fixing plate 121 and the second fixing plate 123 of the inner cable rod 1, so as to ensure a stable match at the connection node of the photovoltaic flexible bracket cable support structure.

In this embodiment of the present disclosure, referring to FIG. 6, two mounting holes 211 are provided at the middle part of each connecting seat 2 along its thickness direction, and the locking member comprises a locking bolt. During assembly, the threaded end of the locking bolt vertically penetrates the first fixing plate 121, the mounting hole 211 of the connecting seat 2, and the second fixing plate 123 in sequence, and is threadedly matched with the three, and then is locked and fixed by a locking nut, so that the corresponding end of the cable rod 1 can be fixed onto the corresponding connecting seat 2. Of course, the locking member can also be configured as a locking pin or other structural forms. In the embodiment of the present disclosure, there is no specific limitation on the configuration of the locking member.

Further, in order to realize the configuration of the connecting seat 2 on the steel cable 100 and ensure the convenience of installing the connecting seat 2 on the steel cable 100, referring to FIG. 4, in this embodiment of the present disclosure, a through hole is formed at a middle position of the connecting seat 2, and the through hole is arranged along the thickness direction of the connecting seat 2. During actual installation, the steel cable 100 passes through multiple through holes in sequence along its own length direction, and is relatively fixed with the corresponding connecting seats 2, so as to achieve a stable installation of multiple connecting seats 2 at corresponding positions in the length direction of the steel cable 100. In addition, during the installation operation, the installation direction of the fixing member 12 is perpendicular to the axial direction of the through hole.

Referring to FIG. 2, FIG. 6 and FIG. 7, in order to facilitate the detachable connection between the steel cable 100 and each connecting seat 2, in this embodiment of the present disclosure, the connecting seat 2 specifically comprises a pressing block 21 and a mounting pad 22. The mounting holes 211 are provided on the pressing block 21 and are located at one end of the pressing block 21 in a width direction. A first through groove 212 is provided on a side of the pressing block 21 away from the mounting holes 211 in the width direction. The first through groove 212 runs through the thickness direction of the pressing block 21 and is arranged parallel to the mounting holes 211, and the first through groove 212 is utilized to accommodate a steel cable 100. Preferably, the first through groove 212 is a U-shaped groove. The mounting pad 22 is preferably configured as a steel plate, and the mounting pad 22 is detachably connected to a side of the pressing block 21 in the width direction where the first through groove 212 is located, so as to be combined with the inner wall of the first through groove 212 to jointly install and fix the steel cable 100.

During actual operations, the staff will embed the corresponding segment of the steel cable 100 into the first through groove 212 from the open end of the first through groove 212, and then fix the mounting pad 22 onto the pressing block 21 at the side of the first through groove 212, so that the connecting seat 2 can be detachably installed at the corresponding position in the length direction of the steel cable 100. This way of fixing the connecting seat 2 and the steel cable 100 is simple and easy, which effectively ensures the convenience of installing the connecting seat 2 on the steel cable 100, improves the assembly efficiency of the two parts, and thus effectively improves the convenience of usage of the cable support unit for photovoltaic flexible brackets.

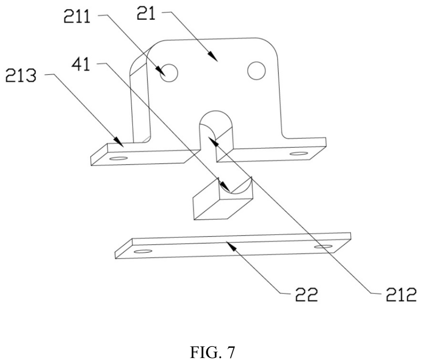

Further, referring to FIG. 6 and FIG. 7, in order to ensure the stability of the connecting seat 2 when installed on the steel cable 100 and reduce the probability of slipping along the length direction of the steel cable 100 after the connecting seat 2 is installed on the steel cable 100, in this embodiment of the present disclosure, an anti-slip strip 4 can be provided at the inner wall of the first through groove 212 to increase the friction between the steel cable 100 and the connecting seat 2 through the anti-slip strip 4.

In this embodiment of the present disclosure, the length direction of the anti-slip strip 4 is parallel to the length direction of the first through groove 212. In the embodiment of the present disclosure, the anti-slip strip 4 can be arranged on the connecting seat 2 as a separate part. For example, the anti-slip strip 4 is detachably arranged onto the inner wall of the first through groove 212, or the anti-slip strip 4 is detachably arranged on the side of the mounting pad 22 at a position corresponding to the first through groove 212. Of course, the anti-slip strip 4 can also be provided integrally with the connecting seat 2. For example, the anti-slip strip 4 is fixed to the side of the mounting pad 22 at a position corresponding to the first through groove 212, and a second through groove 41 is provided on the side of the anti-slip strip 4 away from the mounting pad 22. In other words, the opening of the second through groove 41 is arranged opposite to the opening of the first through groove 212. In actual operations, after the steel cable 100 is coaxially embedded in the first through groove 212 on the pressing block 21, the mounting pad 22 is securely attached onto the corresponding side of the pressing block 21, so that the steel cable 100 is securely embedded in the second through groove 41, and a stable connection between the connecting seat 2 and the corresponding steel cable 100 can be achieved. Since the anti-slip strip 4 and the mounting pad 22 are integrally arranged, while improving the assembly efficiency of the cable support unit for photovoltaic flexible brackets and the steel cable 100, it can also effectively ensure the stability of the cable support unit for photovoltaic flexible brackets provided on the corresponding photovoltaic flexible bracket, and the configuration is well-engineered and practical.

In the embodiments of the present disclosure, there are various ways to fix the anti-slip strip 4 and the mounting pad 22, such as clamping, welding, etc., and an appropriate process can be selected according to the materials of the anti-slip strip 4 and the mounting pad 22, which will not be listed here one by one.

In order to ensure the anti-slip effect as much as possible, in this embodiment of the present disclosure, preferably, the anti-slip strip 4 is configured as an aluminum alloy strip. Because the hardness of aluminum alloys is low, after the mounting pad 22 and the pressing block 21 are securely attached, the aluminum alloy strip is deformed to a certain extent due to the pressure and fits with the surface of the steel cable 100, thereby increasing the roughness of the surface of the anti-slip strip 4 and increasing the friction between it and the surface of the steel cable 100. Compared with anti-slip strips 4 made of other hard materials, the aluminum alloy strip has a better anti-slip effect. The mounting pad 22 is made of steel plate, which avoids easy deformation of an aluminum alloy, enhances the structural strength of the connecting seat 2, and makes the connection more stable and reliable.

In addition, during actual production, the length of the anti-slip strip 4 can be configured to be larger than the length of the first through groove 212. In actual operation, when the anti-slip strip 4 is mounted in the first through groove 212 along its own length direction, the two ends of the anti-slip strip 4 in the length direction extend out of the corresponding side walls of the pressing block 21. Compared to the other configurations in which the two end surfaces of the anti-slip strip 4 must be kept flush with the corresponding side walls of the pressing block 21, this configuration method does not require precise positioning of the anti-slip strip 4 and the pressing block 21 during installation, which reduces the production and installation complexity of the connecting seat 2, and helps to ensure the convenience of production and usage of the photovoltaic flexible bracket cable support structure.

In addition, in order to improve the convenience of attaching the mounting pad 22 and the pressing block 21, and achieve a rapid construction of the photovoltaic flexible bracket cable support structure and the corresponding photovoltaic flexible bracket, in this embodiment of the present disclosure, connecting lugs 213 are provided on the pressing block 21 at the side walls of both ends in the width direction of the first through groove 212. The connecting lugs 213 are arranged parallel to the mounting pad 22 and are located at an end of the pressing block 21 where the first through groove 212 is provided. Connecting structures are arranged at both ends of the mounting pad 22 in the length direction. After the mounting pad 22 and the pressing block 21 are attached, the mounting pad 22 and the corresponding connecting lugs 213 can be detachably fixed through the connecting structure to complete the assembly of the connecting seat 2.

In the embodiments of the present disclosure, the connecting structures can be configured as a fastening bolt and a fixing nut. When the mounting pad 22 and the pressing block 21 are attached, the threaded end of the fastening bolt sequentially passes through the corresponding end of the mounting pad 22 and the corresponding connecting lug 213, and then is locked by the fixing nut, so that the mounting pad 22 and the pressing block 21 can be detachably fixed. Of course, the connecting structure can also be configured in other forms, such as clamping buckles, hooks, etc. In the embodiments of the present disclosure, there is no specific limitation on the form of the connecting structures.

The technical solution is further described below in combination with the photovoltaic module 400 and the steel cable 100. In one embodiment, referring to FIG. 1 to FIG. 7 of the accompanying drawings of the specification, a photovoltaic flexible bracket is disclosed, comprising columns, crossbeams arranged at the top of the columns, steel cables 100, and a plurality of steel cable support structures. The columns are utilized to support the crossbeams, and the steel cables 100 pass through the crossbeams and extend between adjacent columns, and are used to support the photovoltaic modules 400. Specifically, the plurality of steel cables 100 include two load-bearing cables 200 and a stabilizing cable 300 arranged below the load-bearing cables 200. The steel cable support structure is used to support the steel cables 100, and each steel cable support structure comprises a plurality of cable support units for photovoltaic flexible brackets as described in any of the above embodiments, and a plurality of steel cable support structures are arranged at intervals along the length direction of the steel cables 100. The plurality of cable rods 1 of each steel cable support structure are securely connected to the load-bearing cables 200 or to the stabilizing cable 300 in pairs through connecting seats 2, and the plurality of cable rods 1 of each steel cable support structure is located in a same plane. Preferably, the steel cable support structure is arranged in a triangular structure, comprising three cable rods 1 and three connecting seats 2. The three cable rods 1 intersect end to end in sequence and are securely fixed to the load-bearing cables 200 or to the stabilizing cable 300 through the connecting seats 2. The steel cable support structure effectively utilizes the stability principle of a triangle, increases the wind resistance of the photovoltaic flexible bracket, and has better stability.

As is known to all, photovoltaic flexible brackets are usually built in multiple rows, i.e., the photovoltaic flexible brackets have multiple rows. In actual operation, adjacent rows of photovoltaic flexible brackets are connected by a cable support unit for photovoltaic flexible brackets. Specifically, one end of a cable rod 1 of the cable support unit for photovoltaic flexible brackets is connected to a corresponding load-bearing cable 200 of a corresponding photovoltaic flexible bracket through a corresponding fixing member 12, and the other end is connected to the stabilizing cable 300 of the adjacent row of photovoltaic flexible bracket through a corresponding fixing member 12, so that multiple rows of flexible photovoltaic brackets are connected to each other, and the stability and wind resistance are further enhanced. Preferably, the cable support unit connecting two adjacent rows of flexible photovoltaic brackets is configured correspondingly to a cable support structure on the corresponding flexible photovoltaic brackets, and the cable support unit and the cable support structure on the corresponding flexible photovoltaic brackets share a connecting seat 2, and the cable support unit connecting two adjacent rows of flexible photovoltaic brackets and the cable support structure on the corresponding flexible photovoltaic brackets are located in a same plane. It can be understood that the number of cable support units connecting two adjacent rows of flexible photovoltaic brackets can be multiple, and they are arranged in sequence along the length direction of the flexible photovoltaic brackets.

Meanwhile, the photovoltaic modules 400 are usually provided in multiple pieces, and the multiple photovoltaic modules 400 are evenly spaced along the length direction of the steel cables 100 and can be detachably fixed above the two load-bearing cables 200.

The implementation principle of this embodiment of the present disclosure is as follows: in actual operation, after the multiple steel cables 100 of the corresponding photovoltaic flexible brackets are arranged, the connecting seats 2 are installed along the length direction of each steel cable 100. Specifically, after the corresponding segment of a steel cable 100 is embedded into the first through groove 212 from the open end of the first through groove 212, the mounting pad 22 is securely attached onto the side of the pressing block 21 where the first through groove 212 is provided, so as to realize the detachable installation of the corresponding connecting seat 2 at the corresponding position in the length direction of the steel cable 100. After the corresponding positions of two adjacent steel cables 100 are installed with the connecting seats 2, a cable rod 1 is placed between the two steel cables 100, and the fixing members 12 at both ends of the cable rod 1 are respectively buckled onto the corresponding connecting seats 2 on the two steel cables 100, and then the corresponding fixing members 12 are securely fixed with the corresponding connecting seats 2 with locking bolts, so as to complete the support and connection of the corresponding cable rod 1 between the two steel cables 100. This cycle is repeated until the installation operation of all cable rods 1 is completed. Afterwards, the photovoltaic modules 400 are placed one by one onto the two upper steel cables 100, i.e., the load-bearing cables 200, along the length direction of the steel cables 100, and side plates at edges of the photovoltaic modules 400 are connected using connecting structures such as snaps. In this way, the photovoltaic modules 400 can be detachably installed onto the load-bearing cables 200, and the construction of the corresponding photovoltaic flexible bracket is completed.

The cable rod 1 is configured by assembling the circular tubular body 11 and the U-shaped fixing members 12, and the fixing members 12 are utilized to fix the cable rod 1 between two steel cables 100. On one hand, the fixing members 12 and the circular tubular body 11 can be connected in various ways, and the process is simple, so that the production yield of the cable rod 1 is high and it is suitable for mass production. On the other hand, since the fixing member 12 is U-shaped, it is connected to the connecting seat 2 through the first fixing plate 121 and the second fixing plate 123 on both sides. Compared to an operation of connecting a cable rod 1 of a traditional L-shaped angle steel or a C-shaped steel structure to the connecting seat 2 at a side, the cable rod 1 of the present disclosure is easy to use. Due to a different force distribution, eccentric forces are avoided, and the probability of generating a bending moment is effectively reduced, so that the structural durability of the cable rod 1 is better, thereby improving the structural stability of the corresponding photovoltaic flexible bracket. At the same time, the circular tubular body 11 of the cable rod 1 maintains the original circular tubular structure of the material, and the overall appearance is aesthetic. Moreover, compared with the prior art that adopts a process of flattening two ends of a circular tube to form a cable rod 1, the two ends of the circular tubular body 11 of the cable rod 1 of the present disclosure are sealed, and the inner wall of the circular tubular body 11 does not need to be treated for anti-rust during the production process. The anti-rust treatment is simple and easy, which effectively reduces the production cost of the enterprise.

It should be noted that the above embodiments can be freely combined as needed. The above is only the preferred implementation of the present disclosure. It should be pointed out that for ordinary technicians in this technical field, several improvements and modifications can be made without departing from the principle of the present disclosure, and these improvements and modifications should also be regarded as within the protection scope of the present disclosure.

## Claims

1. A cable support unit for photovoltaic flexible brackets, **characterized by** comprising
a cable rod and a connecting seat; wherein
the cable rod comprises a circular tubular body, and which is used for supporting adjacent steel cables; and
a fixing member is respectively provided at two ends of the circular tubular body, and an open groove is provided on each fixing member; and
the connecting seat at least partially extends into the open groove and is fixed to the fixing member through a locking member to connect the cable rod to the steel cable.

2. The cable support unit for photovoltaic flexible brackets according to claim1, **characterized in that**:
the fixing member comprises a first fixing plate, a bottom plate and a second fixing plate, wherein the first fixing plate and the second fixing plate are arranged in parallel and spaced apart, and the bottom plate is arranged between the first fixing plate and the second fixing plate, and two ends of the bottom plate are respectively fixed to the first fixing plate and the second fixing plate, and the first fixing plate, the bottom plate and the second fixing plate jointly enclose and form the open groove; and
the two ends of the circular tubular body are respectively connected to surfaces of corresponding bottom plates away from the corresponding first fixing plate and the corresponding second fixing plate in a thickness direction of the bottom plates; and
the first fixing plate and the second fixing plate are detachably connected to a corresponding connecting seat through the locking member, so that a corresponding end of the cable rod is fixed to a corresponding steel cable.

3. The cable support unit for photovoltaic flexible brackets according to claim 2, **characterized in that**,
a reinforcement rib plate is provided between the first fixing plate and the second fixing plate.

4. The cable support unit for photovoltaic flexible brackets according to claim 2, **characterized in that**:
the locking member comprises a locking bolt; and
a threaded end of the locking bolt vertically penetrates and is threadedly matched with the first fixing plate, the connecting seat and the second fixing plate in sequence; and
the first fixing plate, the bottom plate and the second fixing plate are integrally bent and formed.

5. The cable support unit for photovoltaic flexible brackets according to claim 1, **characterized in that**:
the connecting seat comprises a pressing block and a mounting pad; and
a first through groove is provided on one side of the pressing block and through itself in a thickness direction, and the mounting pad is detachably connected to the side of the pressing block where the first through groove is provided; and
the fixing member is connected to an end of the pressing block away from the mounting pad.

6. The cable support unit for photovoltaic flexible brackets according to claim 5, **characterized in that**:
the connecting seat further comprises an anti-slip strip, which is arranged in the first through groove, and a length direction of the anti-slip strip is parallel to a length direction of the first through groove; and
the anti-slip strip is provided with a second through groove, and an opening of the second through groove is opposite to an opening of the first through groove; and
two ends of the anti-slip strip in the length direction extend out of corresponding side walls of the pressing block, and the mounting pad is pressed onto a side of the anti-slip strip away from the second through groove.

7. The cable support unit for photovoltaic flexible brackets according to claim 6, **characterized in that**:
the anti-slip strip is an aluminum alloy strip, and the mounting pad is a steel plate.

8. The cable support unit for photovoltaic flexible brackets according to any one of claims 5 to 7, **characterized in that**:
two ends of the pressing block corresponding to two ends of the first through groove in a width direction are provided with connecting lugs, and the connecting lugs are arranged parallel to the mounting pad and located at an end of the pressing block provided with the first through groove; and
two ends of the mounting pad in a length direction are provided with connecting structures, and the connecting structures are configured to detachably fix the mounting pad and the corresponding connecting lugs.

9. A photovoltaic flexible bracket, **characterized by** comprising:
a steel cable support structure, wherein the steel cable support structure comprises a plurality of cable support units for photovoltaic flexible brackets as described in any one of claims 1 to 8, and
steel cables, wherein the steel cables comprise a plurality of load-bearing cables and a stabilizing cable disposed below the load-bearing cables; wherein
a plurality of cable rods of the steel cable support structure are fixed to the load-bearing cables or the stabilizing cable in pairs through the connecting seats, and the plurality of cable rods of the steel cable support structure are arranged in a same plane; and
multiple steel cable support structures are provided, and the multiple steel cable support structures are arranged at intervals along length directions of the steel cables.

10. The photovoltaic flexible bracket according to claim 9, **characterized in that**:
a plurality of the photovoltaic flexible brackets are provided, and
adjacent photovoltaic flexible brackets are connected through a cable support unit for photovoltaic flexible brackets, wherein
one end of the cable rod of the cable support unit for photovoltaic flexible brackets is connected to a load-bearing cable of one photovoltaic flexible bracket through a corresponding fixing member, and the other end is connected to the stabilizing cable of an adjacent photovoltaic flexible bracket through a corresponding fixing member.
